# EUROPEAN PATENT SPECIFICATION

(11) **EP 4 462 227 B1**
(45) Date of publication and mention of the grant of the patent: **22.04.2026**
(21) Application number: 23760309.7
(22) Date of filing: 13.02.2023
(51) Int. Cl.: G06F 1/16, H04M 1/02

(54) **ROLLABLE ELECTRONIC DEVICE COMPRISING MULTI-BAR STRUCTURE**
AUFROLLBARE ELEKTRONISCHE VORRICHTUNG MIT MEHRSTANGENSTRUKTUR
DISPOSITIF ÉLECTRONIQUE ENROULABLE COMPRENANT UNE STRUCTURE À BARRES MULTIPLES

(30) Priority: 25.02.2022 KR 20220025348; 08.06.2022 KR 20220069324
(43) Date of publication of application: 13.11.2024
(73) Proprietor: SAMSUNG ELECTRONICS CO., LTD., Yeongtong-gu Suwon-si, Gyeonggi-do 16677 (KR)
(72) Inventor: SHIN, Moonchul, Suwon-si, Gyeonggi-do 16677 (KR); KANG, Youngmin, Suwon-si, Gyeonggi-do 16677 (KR); YOON, Yeonggyu, Suwon-si, Gyeonggi-do 16677 (KR); CHO, Joongyeon, Suwon-si, Gyeonggi-do 16677 (KR); CHOI, Junyoung, Suwon-si, Gyeonggi-do 16677 (KR); YOON, Byounguk, Suwon-si, Gyeonggi-do 16677 (KR); LEE, Junghyeob, Suwon-si, Gyeonggi-do 16677 (KR)
(74) Representative: Gulde & Partner
(86) International application number: PCT/KR2023/002076
(87) International publication number: WO 2023/163435

(56) References cited:
- WO-A1-2022/014958
- WO-A1-2022/015048
- KR-A- 20180 005 476
- KR-A- 20210 143 419
- KR-A- 20210 154 719
- KR-A- 20220 008 738
- US-B1- 11 058 018

## Description

### [Technical Field]

The present disclosure relates to an electronic device.

### [Background Art]

Due to the development in the information and communication technology and semiconductor technology, various functions are being integrated into a single portable electronic device. For example, an electronic device may implement various functions, such as an entertainment function (e.g., a game function), a multimedia function (e.g., a music/video replay function), a communication and security function for mobile banking or the like, a schedule management function, and an e-wallet function, in addition to a communication function. These electronic devices are being miniaturized to be conveniently carried by users.

As mobile communication service is extended to the multimedia service area, it is necessary to increase the size of a display of an electronic device in order to allow users to fully utilize the multimedia service as well as a voice call or short message service. However, the size of the display of the electronic device may be in a trade-off relationship with the downsizing of the electronic device.
WO 2022/015048 A1, WO 2022/014958 A1, KR 2021 0143419 A relate to electronic devices with sliding display being supported by a conventional multi-bar structure.

### [Detailed Description of the Invention]

### [Technical Problem]

An electronic device (e.g., a portable terminal) may include a display having a flat surface or a flat surface and a curved surface. An electronic device including a display may have a limitation in implementing a screen larger than the size of the electronic device due to a fixed display structure. Accordingly, electronic devices including a rollable display are being researched.

An electronic device may include a multi-bar structure configured to support a rollable display. The multi-bar structure may include a hook structure extending from the multi-bar structure to reduce lifting of the rollable display. However, due to the hook structure, the volume of a battery may be reduced, and thus the capacity of the battery may be reduced.

According to various embodiments of the present disclosure, it is possible to provide an electronic device in which lifting or delamination of a display is reduced while increasing the capacity of a battery.

The problems to be solved in the disclosure are not limited to the above-mentioned problems and may be expanded in various ways without departing from the scope of the disclosure.

### [Technical Solution]

The present invention is defined by the appended set of claims. According to various embodiments of the disclosure, an electronic device may include a housing including a first housing and a second housing configured to accommodate at least a portion of the first housing and to move relative to the first housing, a display configured to be slidable based on slide movement of the first housing, a battery disposed within the first housing, a multi-bar structure configured to support the display and including a first multi-bar portion and a second multi-bar portion spaced apart from the first multi-bar portion, and a guide plate connected to the first housing and configured to be at least partially located between the first multi-bar portion and the second multi-bar portion. At least a portion of the multi-bar structure may be configured to move relative to the guide plate along the space between the guide plate and the battery.

According to various embodiments of the present disclosure, an electronic device may include a first housing, a second housing configured to accommodate at least a portion of the first housing and to move relative to the first housing, a display configured to be slidable based on slide movement of the first housing, a multi-bar structure configured to support the display and including a first multi-bar portion and a second multi-bar portion spaced apart from the first multi-bar portion, a guide plate disposed between the first multi-bar portion and the second multi-bar portion and configured to move relative to the second housing together with the first housing, and a guide rail connected to the first housing and configured to guide the movement of the multi-bar structure. The multi-bar structure may be located between the guide rail and the guide plate, and the multi-bar structure may be configured to move relative to the guide plate and the guide rail.

### [Advantageous Effects]

In an electronic device according to various embodiments of the present disclosure, it is possible to reduce the lifting or delamination of a display by using a guide plate configured to guide the movement of a multi-bar structure.

An electronic device according to various embodiments of the present disclosure may include a multi-bar structure configured to move along a guide plate and including a plurality of spaced apart multi-bar portions. By excluding a hook structure of the multi-bar structure due to the multi-bar structure and the guide plate, the volume and/or capacity of a battery can be increased.

Various other effects identified directly or indirectly through the disclosure can be provided.

### [Brief Description of Drawings]

FIG. 1 is a block diagram of an electronic device according to various embodiments of the disclosure in a network environment.
FIG. 2 is a view illustrating the state in which a second display area of a display according to one of various embodiments of the disclosure is accommodated in a second housing.
FIG. 3 is a view illustrating the state in which the second display area of the display according to one of various embodiments of the disclosure is exposed outside the second housing.
FIGS. 4A and 4B are exploded perspective views of an electronic device according to various embodiments of the disclosure.
FIG. 5A is a cross-sectional view illustrating associated configurations of the rack and the gear connected to the motor in the state in which the electronic device according to an embodiment of the disclosure is closed. FIG. 5B is a cross-sectional view illustrating an arrangement relationship of the motor and the battery in the state in which the electronic device according to an embodiment of the disclosure is closed.
FIG. 6A is a cross-sectional view illustrating associated configurations of the rack and the gear connected to the motor in the state in which the electronic device according to an embodiment of the disclosure is opened. FIG. 6B is a cross-sectional view illustrating an arrangement relationship of the motor and the battery in the state in which the electronic device according to an embodiment of the disclosure is opened.
FIG. 7A is a rear perspective view illustrating the internal structure of an electronic device including a guide plate according to an embodiment of the present disclosure in the state in which the electronic device is closed. FIG. 7B is a front perspective view illustrating the internal structure of the electronic device including the guide plate according to an embodiment of the present disclosure in the state in which the electronic device is closed.
FIG. 8A is a rear perspective view illustrating the internal structure of an electronic device including a guide plate according to an embodiment of the present disclosure in the state in which the electronic device is opened. FIG. 8B is a front perspective view illustrating the internal structure of the electronic device including the guide plate according to an embodiment of the present disclosure in the state in which the electronic device is closed.
FIG. 9 is a perspective view of an electronic device including a guide plate and a multi-bar structure according to an embodiment of the present disclosure.
FIG. 10 is a cross-sectional view of an embodiment of the disclosure, taken along line A-A' in FIG. 9.
FIG. 11 is a perspective view of a multi-bar structure according to an embodiment of the disclosure.
FIG. 12 is an enlarged view of area A of FIG. 11 according to an embodiment of the present disclosure.
FIG. 13 is a perspective view of an electronic device including a first guide plate and a second guide plate according to an embodiment of the present disclosure.

### [Mode for Carrying out the Invention]

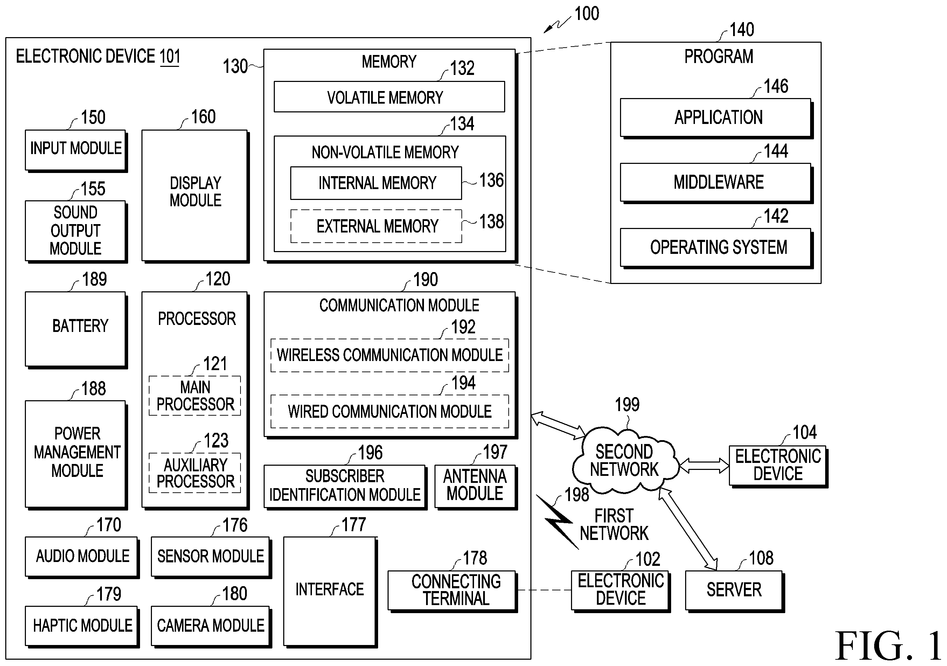

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

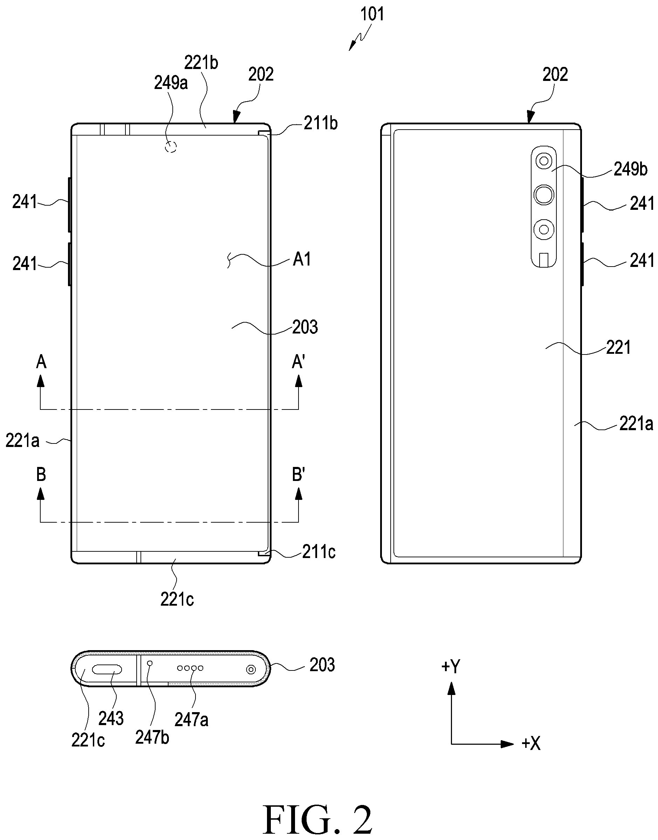

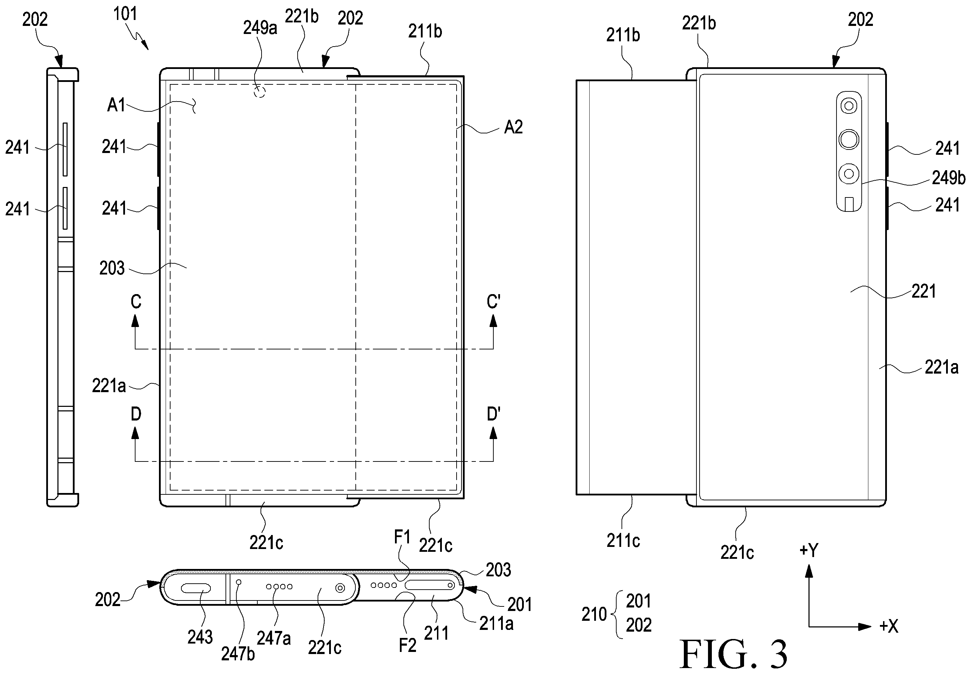

FIG. 2 is a view illustrating the state in which a second display area of a display according to one of various embodiments of the disclosure is accommodated in a second housing. FIG. 3 is a view illustrating the state in which the second display area of the display according to one of various embodiments of the disclosure is exposed outside the second housing.

FIGS. 2 and 3 illustrate a structure in which a display 203 (e.g., a flexible display) is expanded in the right direction when viewed from the front side of the electronic device 101. However, the extending direction of the display 203 is not limited to one direction (e.g., to the right), and the display may be designed to be expandable in the left direction, in the vertical direction, and/or in both directions.

The state illustrated in FIG. 2 may be defined as the state in which the first housing 201 is closed relative to the second housing 202, and the state illustrated in FIG. 3 may be defined as the state in which the first housing 201 is opened relative to the second housing 202. According to an embodiment, the "closed state" or the "opened state" may be defined as the state in which the electronic device is closed or the state in which the electronic device is opened.

Referring to FIGS. 2 and 3, the electronic device 101 includes a housing 210. The housing 201 includes a second housing 202 and a first housing 201 disposed to be movable relative to the second housing 202. In some embodiments, the electronic device 101 may be interpreted as having a structure in which the second housing 202 is disposed to be slidable on the first housing 201. According to an embodiment, the first housing 201 may be disposed to be capable of reciprocating by a predetermined distance in the width direction of the electronic device 101 (e.g., the X-axis direction) with reference to the second housing 202.

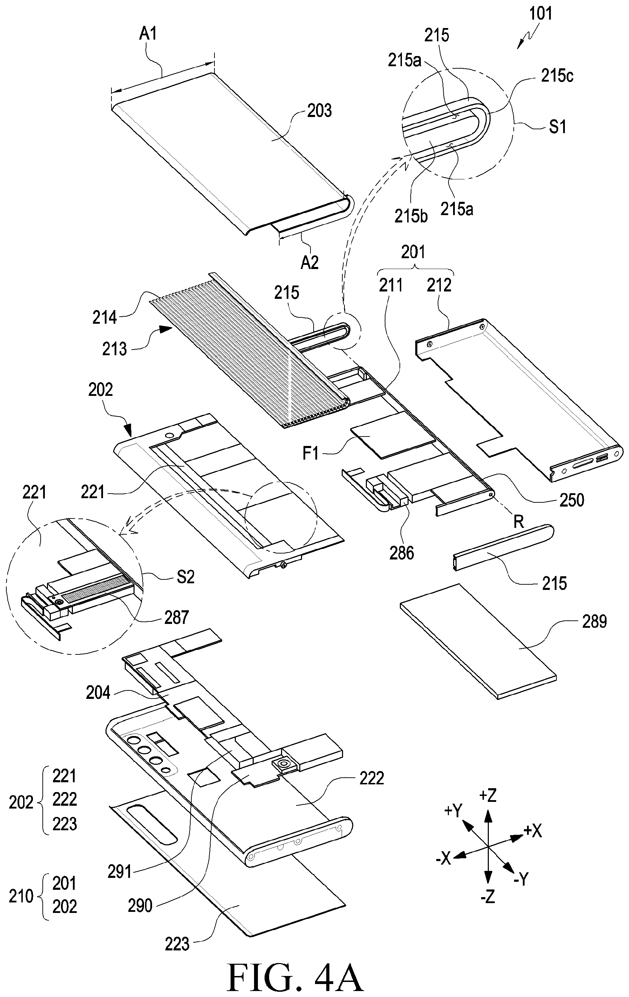

According to various embodiments, the first housing 201 may be referred to as, for example, a first structure, a slide unit, or a slide housing and may be disposed to be capable of reciprocating on the second housing 202. According to an embodiment, the first housing 201 may accommodate various electrical and electronic components such as a circuit board or a battery. The second housing 202 may be referred to as, for example, a second structure, a main unit, or a main housing, and may guide the movement of the first housing 201. A portion of the display 203 (e.g., a first display area A1) may be seated in the first housing 201 (e.g., the first plate 211 in FIG. 4A). According to an embodiment, as the first housing 201 moves (e.g., slides) relative to the second housing 202, another portion of the display 203 (e.g., a second display area A2) may be accommodated inside the housing 210 (e.g., a slide-in operation) or exposed outside the housing 210 (e.g., a slide-out operation). According to an embodiment, a motor, a speaker, a SIM socket, and/or a sub-circuit board electrically connected to a main circuit board may be disposed in the first housing 201. The main circuit board on which electrical components such as an application processor (AP) and a communication processor (CP) are mounted may be disposed in the second housing 202.

According to various embodiments, the first housing 201 may include a first plate 211 (e.g., a slide plate). The first plate 211 may include a first surface (e.g., the first surface F1 in FIG. 3) forming at least a portion thereof and a second surface F2 facing away from the first surface F1. According to an embodiment, the first plate 211 may support at least a portion of the display 203 (e.g., the second display area A2). According to an embodiment, the first housing 201 may include a first plate 211, a (1-1)^{th} side wall 211a extending from the first plate 211, a (1-2)^{th} side wall 211b extending from the (1-1)^{th} side wall 211a and the first plate 211, and a (1-3)^{th} side wall 211c extending from the (1-1)^{th} side wall 211a and the first plate 211 and substantially parallel to the (1-2)^{th} side wall 211b.

According to various embodiments, the second housing 202 may include a second plate 221 (e.g., a main case), a (2-1)^{th} side wall 221a extending from the second plate 221, a (2-2)^{th} side wall 221b extending from the (2-1)^{th} side wall 221a and the second plate 221, and a (2-3)^{th} side wall 221c extending from the (2-1)^{th} side wall 221a and the second plate 221 and substantially parallel to the (2-2)^{th} side wall 221b. According to an embodiment, the (2-2)^{th} side wall 221b and the (2-3)^{th} side wall 221c may be substantially perpendicular to the (2-1)^{th} side wall 221a. According to an embodiment, the second plate 221, the (2-1)^{th} side wall 221a, the (2-2)^{th} side wall 221b, and the (2-3)^{th} side wall 221c may have a shape opened on one side (e.g., the front surface) to accommodate (or surround) at least a portion of the first housing 201. For example, the first housing 201 may be coupled to the second housing 202 while being at least partially surrounded by the same and may slide in a direction parallel to the first surface F1 or the second surface F2, for example, in the width direction of the electronic device 101 (e.g., the X-axis direction), while being guided by the second housing 202. According to an embodiment, the second plate 221, the (2-1)^{th} side wall 221a, the (2-2)^{th} side wall 221b, and/or the (2-3)^{th} side wall 221c may be integrally configured. According to another embodiment, the second plate 221, the (2-1)^{th} side wall 221a, the (2-2)^{th} side wall 221b, and/or the (2-3)^{th} side wall 221c may be configured as separate housings and coupled to or assembled with each other.

According to various embodiments, the second plate 221 and/or the (2-1)^{th} side wall 221a may cover at least a portion of the display 203. For example, at least a portion of the display 203 may be accommodated inside the second housing 202, and the second plate 221 and/or the (2-1)^{th} side wall 221a may cover a portion of the display 203 accommodated inside the second housing 202.

According to various embodiments, the first hosing 201 may be movable in a first direction (e.g., the X-axis direction) parallel to the (2-2)^{th} side wall 221b or the (2-3)^{th} side wall 221c to the opened state or the closed state relative to the second housing 202, and the first housing 201 may be movable to be located at a first distance from the (2-1)^{th} side wall 221a in the closed state and at a second distance, which is greater than the first distance, from the (2-1)^{th} side wall 221a in the opened state.

According to various embodiments, the electronic device 101 may include a display 203, key input devices 241, a connector hole 243, audio modules 247a and 247b, or camera modules 249a and 249b. Although not illustrated, the electronic device 101 may further include an indicator (e.g., an LED device) or various sensor modules.

According to various embodiments, the display 203 may include a first display area A1 and a second display area A2. According to an embodiment, the first display area A1 may be disposed on the second housing 202. For example, the first display area A1 may be disposed on the second plate (e.g., the second plate 221 in FIG. 4A) of the second housing 202. The second display area A2 may extend from the first display area A1 and may be inserted into or accommodated inside the housing 210 or may be exposed outside the housing 210 depending on the sliding of the first housing 201. For example, when the electronic device 101 is in the closed state (e.g., FIG. 2), the second display area A2 may be located between the first housing 201 (e.g., the first plate 211 in FIG. 4A) and the second housing 202 (e.g., the second plate cover 222 in FIG. 4A).

According to various embodiments, the second display area A2 may move while being substantially guided by an area of the first housing 201 (e.g., the curved surface 250 in FIG. 4A) to be accommodated inside the second housing 202 or a space defined between the first housing 201 and the second housing 202, or to be exposed outside. According to an embodiment, the second display area A2 may move based on a slide movement in the width direction of the electronic device 101 (e.g., the X-axis direction). For example, while the first housing 201 slides, a portion of the second display area A2 may be transformed into a curved shape at a position corresponding to the curved surface 250 of the first housing 201.

According to various embodiments, when viewed from above the first plate 211 (e.g., the slide plate), if the first housing 201 moves from the closed state to the opened state, the second display area A2 may define a substantially flat surface with the first display area A1 while being gradually exposed outside the second housing 202. The display 203 may be coupled to or disposed adjacent to a touch detection circuit, a pressure sensor capable of measuring a touch intensity (pressure), and/or a digitizer configured to detect a magnetic field-type stylus pen. In an embodiment, the second display area A2 may be at least partially accommodated inside the second housing 202, and even in the state illustrated in FIG. 2 (e.g., the closed state), a portion of the second display area A2 may be visually exposed outside. According to an embodiment, irrespective of the closed state or the opened state, a portion of the exposed second display area A2 may be located on a portion (e.g., the curved surface 250 in FIG. 4A) of the first housing, and at a position corresponding to the curved surface 250, a portion of the second display area A2 may maintain the curved shape.

According to various embodiments, the key input devices 241 may be located in an area of the first housing 201. The electronic device 101 may be designed such that the illustrated key input devices 241 are omitted or additional key input devices are included depending on the external appearance and use state. According to an embodiment, the electronic device 101 may include key input devices (not illustrated), such as a home key button or touch pads disposed around the home key button. According to another embodiment, at least some of the key input devices 241 may be disposed on the (2-1)^{th} side wall 221a, the (2-2)^{th} side wall 221b, or the (2-3)^{th} side wall 221c of the second housing 202.

According to various embodiments, the connector hole 243 may be omitted in some embodiments and may accommodate a connector (e.g., a USB connector) for transmitting/receiving power and/or data to/from an external electronic device. Although not illustrated, the electronic device 101 may include a plurality of connector holes 243, and some of the connector holes 243 may function as connector holes for transmitting/receiving audio signals to/from an external electronic device. In the illustrated embodiment, the connector hole 243 is disposed in the (2-3)^{th} side wall 221c, but the disclosure is not limited thereto. The connector hole 243 or another connector hole (not illustrated) may be disposed in the (2-1)^{th} side wall 221a or the (2-2)^{th} side wall 221b.

According to various embodiments, the audio modules 247a and 247b may include one or more speaker holes 247a or one or more microphone holes 247b. One of the speaker holes 247a may be provided as a receiver hole for a voice call, and another one may be provided as an external speaker hole. The electronic device 101 may include a microphone configured to acquire sound, and the microphone may acquire sound outside the electronic device 101 through the microphone holes 247b. According to an embodiment, the electronic device 101 may include a plurality of microphones in order to detect the direction of sound. According to an embodiment, the electronic device 101 may include an audio module in which the speaker holes 247a and the microphone holes 247b are implemented as a single hole, or a speaker in which the speaker holes 247a are excluded (e.g., a piezo speaker).

According to various embodiments, the camera modules 249a and 249b may include a first camera module 249a and a second camera module 249b. The electronic device 101 may include a plurality of camera modules 249a and 249b. For example, the electronic device 101 may include at least one of a wide-angle camera, a telephoto camera, and a close-up camera. In some embodiments, the electronic device 101 may include an infrared projector and/or an infrared receiver to measure the distance to a subject. The camera modules 249a and 249b may include one or more lenses, image sensors, and/or image signal processors. The first camera module 249a may be disposed to face the same direction as the display 203. For example, the first camera module 249a may be disposed around the first display area A1 or in an area overlapping the display 203, and when disposed in the area overlapping the display 203, the first camera module 249a may capture an image of a subject through the display 203. According to an embodiment, the first camera module 249a may include an under-display camera (UDC) which may be hidden without being visually exposed to a screen display area (e.g., the first display area A1). The second camera module 249b may be located in the first housing 201 and may capture an image of a subject in a direction opposite to the first display area A1 of the display 203.

According to various embodiments, an indicator (not illustrated) of the electronic device 101 may be disposed on the first housing 201 or the second housing 202 and may include a light-emitting diode to provide status information of the electronic device 101 as a visual signal. A sensor module (not illustrated) of the electronic device 101 may generate an electrical signal or a data value corresponding to an internal operating status of the electronic device 101 or an external environmental status. The sensor module may include, for example, a proximity sensor, a fingerprint sensor, or a biometric sensor (e.g., an iris/face recognition sensor or an HRM sensor). In another embodiment, the sensor module may further include at least one of, for example, a gesture sensor, a gyro sensor, an atmospheric pressure sensor, a magnetic sensor, an acceleration sensor, a grip sensor, a color sensor, an infrared (IR) sensor, a temperature sensor, a humidity sensor, or an illuminance sensor.

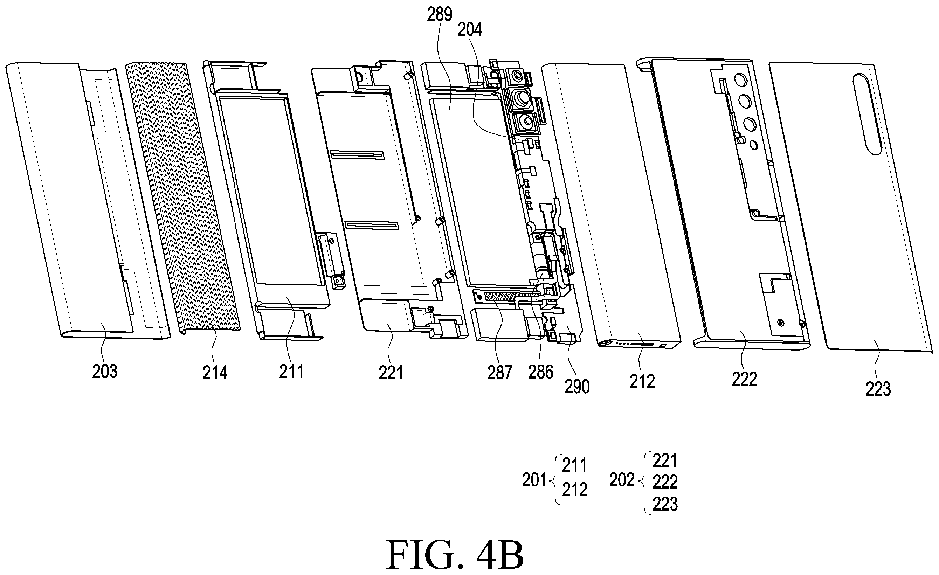

FIGS. 4A and 4B are exploded perspective views of an electronic device according to various embodiments of the disclosure.

Referring to FIGS. 4A and 4B, the electronic device 101 includes a first housing 201, a second housing 202, a display 203 (e.g., a flexible display, a foldable display, or a rollable display), and a support structure 213 (e.g., a multi-joint hinge structure or a multi-bar structure). A portion of the display 203 (e.g., the second display area A2) may be accommodated inside the electronic device 101 along the curved surface 250 of the first housing 201.

The configurations of the first housing 201, the second housing 202, and the display 203 of FIGS. 4A and 4B may be wholly or partly the same as those of the first housing 201, the second housing 202, and the display 203 of FIGS. 2 and 3.

According to various embodiments, the first housing 201 may include a first plate 211 and a slide cover 212. The first plate 211 and the slide cover 212 may be mounted on (e.g., at least partially connected to) the second housing 202 and may linearly reciprocate in a direction (e.g., the X-axis direction in FIGS. 2 and 3) while being guided by the second housing 202. According to an embodiment, the first plate 211 may support the display 203. For example, the first plate 211 may include a first surface F1, and the second display area A2 of the display 203 may be substantially located on the first surface F1 and maintained in a flat plate shape. The slide cover 212 may protect the display 203 located on the first plate 211. For example, at least a portion of the display 203 may be located between the first plate 211 and the slide cover 212. According to an embodiment, the first plate 211 and the slide cover 212 may be made of a metal material and/or a non-metal (e.g., polymer) material. According to an embodiment, the first plate 211 may accommodate at least some of the components of the electronic device 101 (e.g., a battery 289, a motor structure 286, and a rack 287).

According to various embodiments, the support structure 213 may support the display 203. For example, the support structure 213 may be connected or attached to at least a portion of the display 203 (e.g., the second display area A2). According to an embodiment, the support structure 213 may be located between the first plate 211 and the slide cover 212. According to an embodiment, as the first housing 201 slides, the support structure 213 is movable relative to the second housing 202. In the closed state (e.g., FIG. 2), most of the support structure 213 may be accommodated inside the housing 210. For example, in the closed state, at least a portion of the support structure 213 may be located between the first plate 211 and the slide cover 212. The second plate cover 222 may accommodate at least a portion of the first plate 211, the support structure 213, and the slide cover 212. According to an embodiment, at least a portion of the support structure 213 may move to correspond to the curved surface 250 located at an edge of the first housing 201.

According to various embodiments, the support structure 213 may include plurality of bars (or multiple rods) 214. The plurality of bars 214 may be linearly extended and disposed to be parallel to the rotation axis R of the curved surface 250 and may be arranged in a direction substantially perpendicular to the rotation axis R (e.g., the direction in which the first housing 201 slides).

According to various embodiments, the electronic device 101 may include guide rails 215 capable of guiding the movement of the plurality of bars 214. The guide rails 215 may include an upper end guide rail coupled to the upper end of the first plate 211 and accommodating the upper end portions of the plurality of bars 214, and a lower end guide rail coupled to the lower end of the first plate 211 and accommodating the lower end portions of the plurality of bars 214. According to an embodiment, referring to a first enlarged area S1, when the display 203 is bent or slid while the plurality of bars 214 move on the curved surface 250, the upper end portions and/or the lower end portions of the plurality of bars 214 are movable while maintaining the state of being fitted and coupled to the guide rails 215. For example, the upper end portions and/or the lower end portions of the plurality of bars 214 may slide along groove-shaped rails 215a provided inside the guide rails 215 in the state of being fitted to the rails 215a.

According to an embodiment, the first plate 211 on which the motor structure 286 is disposed may perform the slide-out operation by the driving of the motor structure 286 (e.g., driving for slide-out of the display). For example, the first plate 211 moves in the first direction (the +X direction) in the slide-out operation, and protrusions 215b inside the guide rails 215 connected to the first plate 211 may provide pressure to the upper end portions (e.g., the end portions in the +Y direction) and/or the lower end portions (e.g., the end portions in the -Y direction) of the bent plurality of bars 214. According to an embodiment, when the first plate 211 moves in the first direction (the +X direction), the curved surface 250 of the first plate 211 may provide pressure to the multi-bar structure 213 together with the guide rails 215. Accordingly, the display 203 accommodated between the first plate 211 and the slide cover 212 may be expanded to the front surface.

According to an embodiment, the first plate 211 on which the motor structure 286 is disposed may be perform the slide-in operation by the driving of the motor structure 286 (e.g., driving for slide-in of the display). For example, in the slide-in operation, the first plate 211 may move in the second direction (the -X direction), and the outer portions (215c) (e.g., the portions other than the protrusions 215b) of the guide rails 215 connected to the first plate 211 may provide pressure to the upper end portions and/or the lower end portions of the bent plurality of bars 214. Accordingly, the expanded display 203 may be accommodated between the first plate 211 and the slide cover 212.

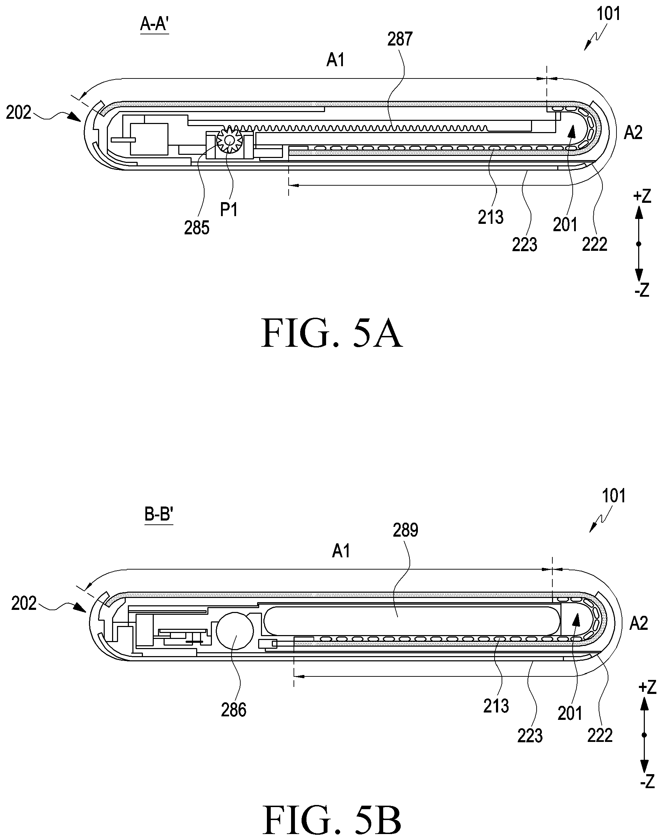

According to various embodiments, the structure or housing to which the rack 287 is connected may be different from the structure or housing to which the motor structure 286 is connected. According to an embodiment, the rack 287 may be disposed within the second housing 202, and the motor structure 286 may be disposed within the first housing 201. A second enlarged area S2 represents the rear surface (e.g., the surface oriented in the -Z-axis direction) of the second plate 221. Referring to the second enlarged area S2, the rack 287 may be disposed on a surface (e.g., the surface oriented in the -Z-axis direction) of the second plate 221 of the second housing 202. The rack 287 may be configured to be engaged with a gear (e.g., the gear 285 in FIG. 5A) connected to the motor structure 286, and when the gear 285 rotates, the second plate 221 may move along the slide direction (e.g., X-axis direction) in the electronic device 101. As the driving force generated by the motor structure 286 is transmitted to the rack 287, the sliding of the housing 210 and/or the expansion or contraction of the display 203 may be performed. According to another embodiment (not illustrated), the rack 287 may be disposed within the first housing 201 and the motor structure 286 may be disposed within the second housing 202. For example, the rack 287 may be fixedly disposed on the first plate 211 of the first housing 201, and the motor structure 286 disposed on the second plate 221 of the second housing 202 may slide while rotating with the gear connected to the motor structure 286.

According to various embodiments, the second housing 202 may include a second plate 221, a second plate cover 222, and a third plate 223. The second plate 221 may support the electronic device 101 as a whole. The first plate 211 may be disposed on one surface of the second plate 221, and a printed circuit board 204 may be coupled to the other surface of the second plate 221. According to an embodiment, the second plate 221 may accommodate components of the electronic device 101 (e.g., the battery 289 and the circuit board 204). The third plate cover 222 may protect various components positioned on the second plate 221.

According to various embodiments, a plurality of boards may be accommodated in the second housing 202. The circuit board 204, which is the main board, may be mounted with a processor, memory, and/or an interface. The processor may include one or more of, for example, a central processing unit, an application processor, a graphics processing unit, an image signal processor, a sensor hub processor, or a communication processor. According to various embodiments, the circuit board 204 may include a flexible printed circuit board-type radio frequency cable (FRC). For example, the circuit board 204 may be disposed in at least a portion of the second plate 221 and may be electrically connected to an antenna module and a communication module.

According to an embodiment, the memory may include, for example, volatile memory or nonvolatile memory.

According to an embodiment, the interface may include, for example, a high-definition multimedia interface (HDMI), a universal serial bus (USB) interface, an SD card interface, and/or an audio interface. For example, the interface may electrically or physically connect the electronic device 101 to an external electronic device and include a USB connector, an SD card/MMC connector, or an audio connector.

According to various embodiments, the electronic device 101 may further include a separate sub-circuit board 290 spaced apart from the circuit board 240 within the second housing 202. The sub-circuit board 290 may be electrically connected to the circuit board 240 via a flexible connection board 291. The sub-circuit board 290 may be electrically connected to the battery 289 or electrical components disposed in an end area of the electronic device 101, such as a speaker and/or a SIM socket, to transmit signals and power.

According to various embodiments, the battery 289 is a device for supplying power to at least one component of the electronic device 101, and may include, for example, a non-rechargeable primary battery, a rechargeable secondary battery, or a fuel cell. At least a portion of the battery 289 may be disposed on substantially the same plane as, for example, the circuit board 204. The battery 289 may be integrally disposed inside the electronic device 101 or may be detachably disposed on the electronic device 101.

According to an embodiment, the battery 289 may be configured as a single integrated battery or may include a plurality of separable batteries. For example, when the integrated battery is located on the first plate 211, the battery may move along with the sliding of the first plate 211.

According to various embodiments, the third plate 223 may substantially define at least a portion of the exterior of the second housing 202 or the electronic device 101. For example, the third plate 223 may be coupled to the outer surface of the second plate cover 222. According to an embodiment, the third plate 223 may be configured integrally with the second plate cover 222. According to an embodiment, the third plate 223 may provide a decorative effect on the exterior of the electronic device 101. The second plate 221 and the second plate cover 222 may be manufactured by using at least one of metal or polymer, and the third plate 223 may be manufactured by using at least one of metal, glass, synthetic resin, or ceramic. According to an embodiment, the second plate 221, the second plate cover 222, and/or the third plate 223 may be made of a material that transmits light at least partially (e.g., in an auxiliary display area). For example, in the state in which a portion of the display 203 (e.g., the second display area A2) is accommodated inside the electronic device 101, the electronic device 101 may output visual information by using the second display area A2. The auxiliary display area may be a portion of the second plate 221, the second plate cover 222, and/or the third plate 223 in which the display 203 accommodated inside the second housing 202 is located.

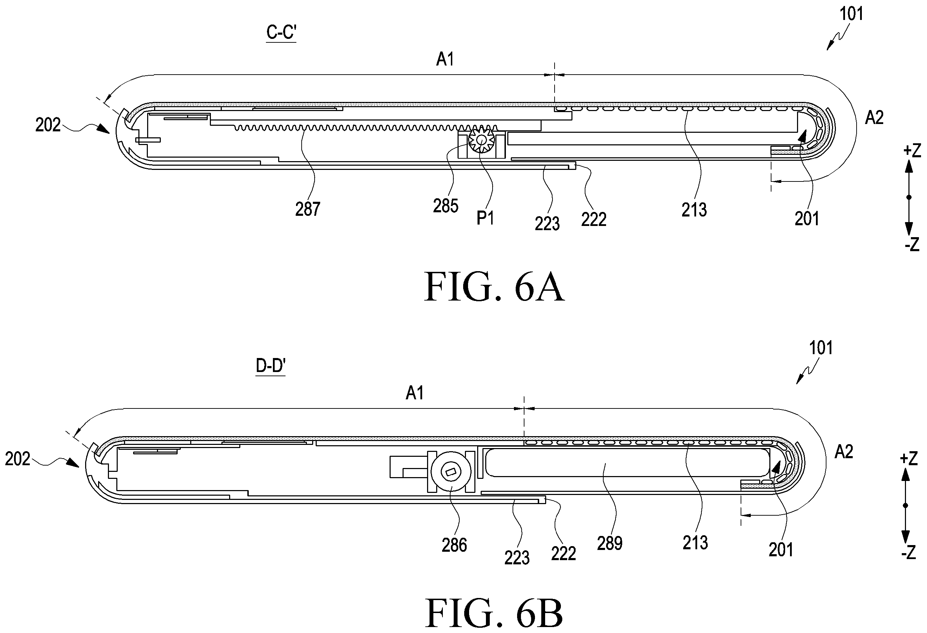

FIG. 5A is a cross-sectional view illustrating associated configurations of the rack and the gear connected to the motor in the state in which the electronic device according to various embodiments of the disclosure is closed. FIG. 5B is a cross-sectional view illustrating an arrangement relationship of the motor and the battery in the state in which the electronic device according to various embodiments of the disclosure is closed. For example, FIG. 5A is a cross-sectional view taken along line A-A' in FIG. 2, and FIG. 5B is a cross-sectional view taken along line B-B' in FIG. 2. FIG. 6A is a cross-sectional view illustrating associated configurations of the rack and the gear connected to the motor in the state in which the electronic device according to various embodiments of the disclosure is opened. FIG. 6B is a cross-sectional view illustrating an arrangement relationship of the motor and the battery in the state in which the electronic device according to various embodiments of the disclosure is opened. For example, FIG. 6A is a cross-sectional view taken along line C-C' in FIG. 3, and FIG. 6B is a cross-sectional view taken along line D-D' in FIG. 3.

According to various embodiments, the electronic device 101 includes a first housing 201, a second housing 202, and a display 203, and may include a driving structure (e.g., the rack 2 and the motor structure 286). The electronic device 101 may further include various components (e.g., a camera module and a battery) disposed in the first housing 201 or the second housing 202.

The configurations of the first housing 201 and the second housing 202 of FIGS. 5A to 6B may be wholly or partly the same as those of the first housing 201 and the second housing 202 of FIGS. 2 to 4B.

According to various embodiments, depending on whether the first housing 201 (and the flexible display 203 connected to the first housing 201) slides in or slides out relative to the second housing 202, the electronic device may be in the closed state or the opened state.

According to various embodiments, the electronic device 101 may include a driving structure for automatically or semi-automatically providing the slide-in/out operation of the display 203. For example, when a user pushes an open trigger button (e.g., the key input devices 241 in FIG. 2) exposed outside the electronic device 101, the display 203 may be automatically slid in or slid out (automatic operation). As another example, when the user pushes the display 203 of the electronic device 101 to slide out up to a predetermined section, the remaining section may completely slide out by the force of an elastic member mounted in the electronic device 101 (semi-automatic operation). The slide-in operation of the electronic device 101 may also be performed to correspond to the slide-out operation (semi-automatic operation).

According to an embodiment, the driving structure may include a motor structure 286, a gear 285 mounted at an end of the motor structure 286, a rack 287, and a connection board (not illustrated) electrically connected to the motor structure 286. According to an embodiment, the gear 285 may be a pinion gear. According to an embodiment, the rack 287 may be engaged with the gear 285. For example, the gear 285 may rotate based on the rotation of the motor structure 286, and the rack 287 may receive at least a portion of the driving force generated by the motor structure 286 via the gear 285.

According to an embodiment, the motor structure 286 may be disposed within the first housing 201 to be slidable relative to the second housing 202. The motor structure 286 may transmit a driving force to the gear 285 connected to an end portion thereof.

According to an embodiment, the motor structure 286 may be disposed not to overlap the second display area A2 of the display 203. For example, a shaft P1 of the motor structure 286 may be disposed to be perpendicular to the sliding direction, and one surface of the motor structure 286 oriented in the +Z-axis direction may overlap the first display area A1, but one surface oriented in the -Z-axis direction may be disposed not to overlap the second display area A2 regardless of the slide-in and the slide-out of the display 203. The one surface of the motor structure 286 oriented in the -Z axis direction may face the first housing 201 in the slide-in state of the display 203 and may face the second housing 202 in the slide-out state of the display 203. According to an embodiment, the motor structure 286 may be disposed in parallel with at least a portion of the battery 289 and electrically connected to the connection board disposed adjacent thereto.

According to an embodiment, the rack 287 may be disposed in the second housing 202 and guide the sliding of the first housing 201 and the display 203. The rack 287 may be fixedly disposed on one surface (e.g., the one surface oriented in the -Z-axis direction) of the second plate 221 of the second housing 202 and guide the gear 285 to be movable in the sliding direction to move while rotating. At least a portion of the one surface of the rack 287 oriented in the -Z-axis direction may face the second display area A2 in the slide-in state of the display 203 and may not face the second display area A2 in the slide-out state of the display 203. According to an embodiment, the rack 287 may be disposed not to overlap the battery 289. For example, when separable batteries are disposed in the electronic device 101, the rack 287 may be located between respective batteries when viewed toward the rear surface.

According to an embodiment, the gear 285 may be located on the shaft P1 of the motor structure 286 and may cause the first housing 201 and the display 203 to slide while rotating and moving along the rack 287. When the first housing 201 slides due to rotation of the gear 285, an electrical component (hereinafter, referred to as a first electrical component) mounted in the first housing 201 may also slide. For example, the first electrical component may be at least one of the motor structure 286, components disposed on the connection board (not illustrated), a speaker, or a SIM socket. As another example, the first electrical component may be the battery 289. When the battery 289 is separable batteries, the electrical component may be at least one of the separable batteries 289.

According to an embodiment, the connection board may be disposed adjacent to the motor structure 286 and/or the rack 287 in the first housing 201. The connection board may be configured to be electrically connected to a main circuit board (e.g., the circuit board 204 in FIG. 4A) disposed in the second housing 202. The main circuit board may accommodate an electrical structure (e.g., a processor) to control driving of the motor structure 286 or to provide power to the motor structure 286. The connection board may be electrically connected to the main circuit board 204 to transmit signals for controlling driving of the motor structure 286 or for controlling power. According to an embodiment, the connection board and the main circuit board 204 may be rigid boards, and the electronic device 101 may further include a separate connection FPCB configured to interconnect the connection board and the main circuit board 204. According to another embodiment, power from the battery 289 disposed adjacent to the motor structure 286 may directly provide power via the connection board.

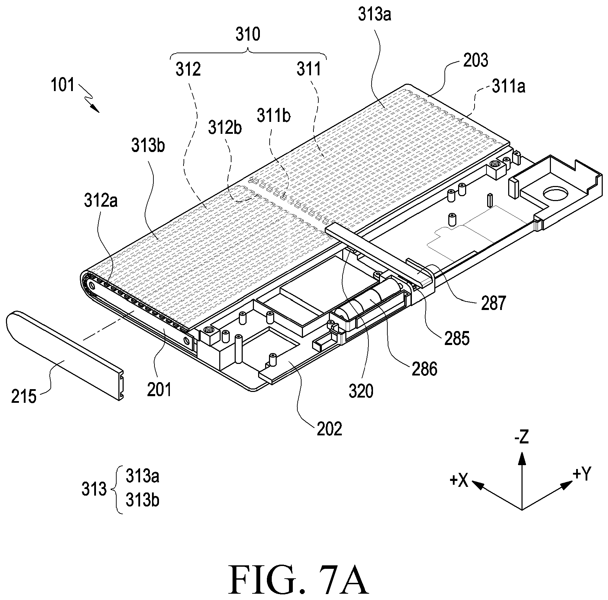

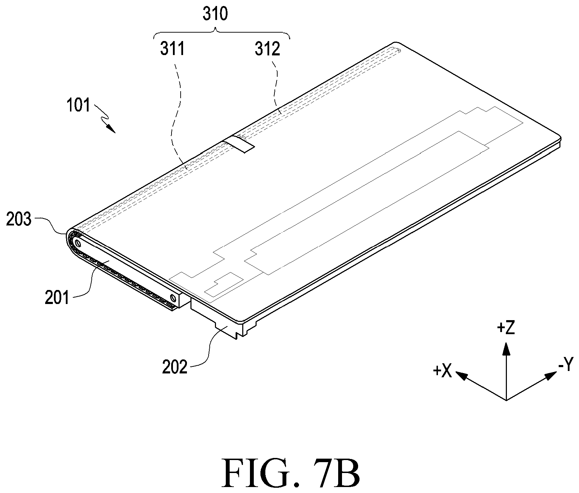

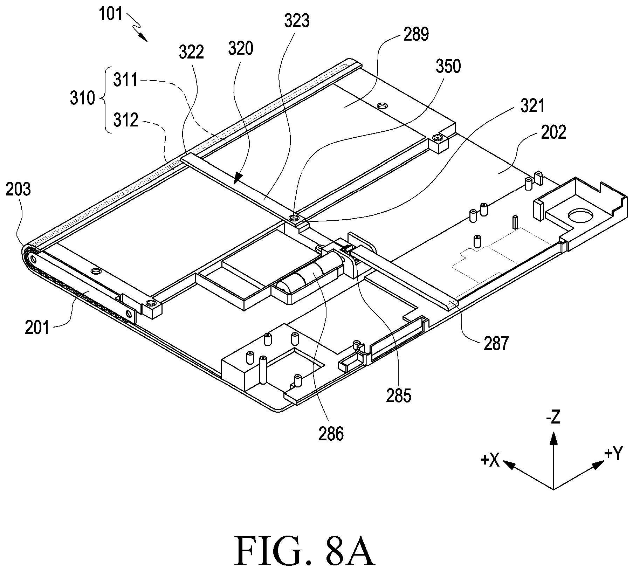

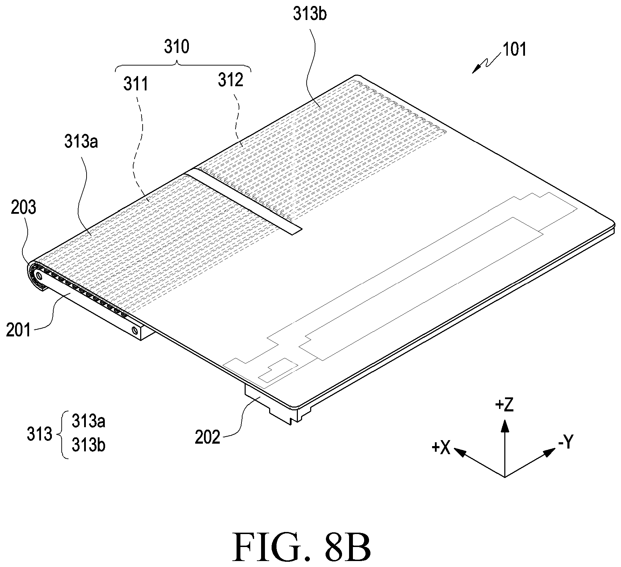

FIG. 7A is a rear perspective view illustrating the internal structure of an electronic device including a guide plate according to an embodiment of the present disclosure in the state in which the electronic device is closed. FIG. 7B is a front perspective view illustrating the internal structure of the electronic device including the guide plate according to an embodiment of the present disclosure in the state in which the electronic device is closed. FIG. 8A is a rear perspective view illustrating the internal structure of an electronic device including a guide plate according to an embodiment of the present disclosure in the state in which the electronic device is opened. FIG. 8B is a front perspective view illustrating the internal structure of the electronic device including the guide plate according to an embodiment of the present disclosure in the state in which the electronic device is closed.

Referring to FIG. 7A, FIG. 7B, FIG. 8A, and/or FIG. 8B, the electronic device 101 includes a first housing 201, a second housing 202, a display 203, a multi-bar structure 310, and a guide plate 320. The configurations of the first housing 201, the second housing 202, the display 203, and the multi-bar structure 310 in FIG. 7A, FIG. 7B, FIG. 8A, and/or FIG. 8B are wholly or partly the same as those of the first housing 201, the second housing 202, the display 203, and the support structure 213 of FIG. 4A and/or FIG. 4B.

According to an embodiment, the electronic device 101 may be switched to the closed state (e.g., FIGS. 7A and 7B) or the expanded state (e.g., FIGS. 8A and 8B). According to an embodiment, the electronic device 101 may include a motor structure 286 configured to generate power for sliding movement in the electronic device 101. The motor structure 286 may include a motor core capable of converting electrical energy into kinetic energy (e.g., rotation energy). According to an embodiment, the rotation energy generated in the motor structure 286 may rotate the gear 285 (e.g., a pinion gear).

According to an embodiment, the motor structure 286 may be controlled by a processor (e.g., the processor 120 in FIG. 1). For example, the processor 120 may include a motor driver driving circuit and may provide a pulse width modulation (PWM) signal to the motor structure 286 to control the speed of the motor structure 286 and/or the torque of the motor structure 286.

According to an embodiment, gear structures 285 and 287 may transmit at least a portion of the driving force generated by the motor structure 286 to the first housing 201 and/or the second housing 202. For example, the gear structures 285 and 287 may include a gear 285 (e.g., a first gear or a pinion gear) and a rack 287 (e.g., a second gear) configured to be engaged with the gear 285. The gear 285 and/or the rack 287 may transmit a driving force for the slide-in operation and/or slide-out operation of the electronic device 101 to the first housing 201 and/or the second housing 202. According to an embodiment, the first housing 201 may be moved relative to the second housing 202 by using the motor structure 286, the gear 285, and/or the rack 287.

According to an embodiment, the gear 285 may rotate based on rotation of the motor core of the motor structure 286. According to an embodiment, the gear 285 may be a spur gear. According to an embodiment, the pinion gear 285 may be engaged with the rack 287.

According to an embodiment, the rack 287 may be connected to a different housing from that to which the motor structure 286 is connected. For example, the rack 287 may be connected to the second housing 202, and the motor structure 286 may be connected to first housing 201. According to an embodiment, when the gear 285 is rotated by the driving force generated by the motor structure 286, the motor structure 286 and the gear 285 may move relative to the rack 287. According to an embodiment, the rack 287 may be connected to a portion of the second housing 202 (e.g., the second plate 221 in FIG. 4A), and the motor structure 286 may be connected to a portion of the first housing 201 (e.g., the first plate 211 in FIG. 4A). According to another embodiment, the motor structure 286 may be connected to a portion of the second housing 202 (e.g., the second plate 221 in FIG. 4A), and the rack 287 may be connected to a portion of the first housing 201 (e.g., the first plate 211 in FIG. 4A).

According to an embodiment, the multi-bar structure 310 includes a plurality of multi-bar portions 311 and 312 spaced apart from each other. For example, the multi-bar structure 310 may include a first multi-bar portion 311 and a second multi-bar portion 312 spaced apart from the first multi-bar portion 311. The multi-bar structure 310 may include at least one bar 313. For example, the first multi-bar portion 311 may include one or more first bars 313a, and the second multi-bar portion 312 may include one or more second bars 313b. According to an embodiment, since the multi-bar structure 310 includes a plurality of multi-bar portions 311 and 312 spaced apart from each other, so that the lengths of the bars 313 of the multi-bar structure 310 may be reduced compared to the length of bars included in an integrated multi-bar structure. For example, the sum of the length of the first bars 313a of the first multi-bar portion 311 and the length of the second bars 313b of the second multi-bar portion 312 may be smaller than the length of the bars included in the integrated multi-bar structure. The adhesion force of the multi-bar structure 310, which includes the plurality of multi-bar portions 311 and 312 spaced apart from each other, to the display 203 may be greater than the adhesion force of the integrated multi-bar structure to the display 203. For example, as the length of the bars 313 of the multi-bar structure 310 increases, the bending of the multi-bar structure 310 may increase, and the adhesion force between the display 203 and the bars 313 may decrease. According to an embodiment, the multi-bar structure 310 may be referred to as a support structure, a display support structure, and/or a multi-joint structure. According to an embodiment, the length of the bars 313 may be designed in various ways. For example, the length of the first bars 313a may be substantially the same as the length of the second bars 313b. As another example, the length of the first bars 313a may be different from the length of the second bars 313b.

According to an embodiment, at least a portion of the multi-bar structure 310 may be located between a guide rail (e.g., the guide rail 215 in FIG. 4) and the guide plate 320. For example, the multi-bar structure 310 may include first end portions 311a and 312a facing the guide rail 215, and second end portions 311b and 312b opposite to the first end portions 311a and 312a and facing the guide plate 320. According to an embodiment, the second end portions 311b and 312b may slide along the guide plate 320. According to an embodiment, the first multi-bar portion 311 may include a (1-1)^{th} end portion 311a facing the guide rail 215 and a (1-2)^{th} end portion 311b opposite to the (1-1)^{th} end portion 311a. The second multi-bar portion 312 may include a (2-1)^{th} end portion 312a facing the guide rail 215 and a (2-2)^{th} end portion 312b opposite to the (2-1)^{th} end portion 312a.

According to an embodiment, the guide plate 320 may guide the movement of the multi-bar structure 310. For example, the multi-bar structure 310 may slide along the guide plate 320. According to an embodiment, the multi-bar structure 310 may move relative to the guide plate 320 along the space between the guide plate 320 and the battery 289. According to an embodiment, the guide plate 320 may be located between the first multi-bar portion 311 and the second multi-bar portion 312.

According to an embodiment, the guide plate 320 may be connected to the first housing 201. For example, the guide plate 320 may be fastened or connected to the first housing 201 by a fastening member 350, and may move relative to the second housing 202 together with the first housing 201. According to an embodiment, the guide plate 320 may include a first end area 321 connected to the first housing 201 and a second end area 322 opposite to the first end area 321 and connected to the first housing 201.

According to an embodiment, the battery 289 may be disposed on the first housing 201. For example, the battery 289 may be connected to the first housing 201 and move relative to the second housing 202 together with the first housing 201. According to an embodiment, the guide plate 320 may face at least a portion of the battery 289. For example, the guide plate 320 may include a central area 323 that crosses at least a portion of the battery 289. The central area 323 may be referred to as a portion of the guide plate 320 located between the first end area 321 and the second end area 322. For example, the central area 323 may extend from the first end area 321 to the second end area 322 across the battery 289.

According to an embodiment, the guide plate 320 may be connected to the first housing 201. For example, the guide plate 320 may be fastened or fixed to the first housing 201 by a fastening member 350, and may move relative to the second housing 202 together with the first housing 201. According to an embodiment, the fastening member 350 may include a screw or a boss structure.

According to an embodiment, at least a portion of the guide plate 320 may face the rack 287. For example, when the electronic device 101 is closed (e.g., FIG. 7A and/or FIG. 7B ), the guide plate 320 may face the rack 287.

According to an embodiment, the material of the multi-bar structure 310 may be substantially the same as that of the guide plate 320. Since the multi-bar structure 310 and the guide plate 320 are made of the same material, dust generated due to friction between the multi-bar structure 310 and the guide plate 320 can be reduced.

According to an embodiment, the density of the multi-bar structure 310 and/or the guide plate 320 may be higher than the density of the first housing 201. For example, the multi-bar structure 310 and the guide plate 320 may be made of a first material with a first density, and the first housing 201 may be made of a second material with a second density lower than the first density of the first material. When the density of the first housing 201 is lower than that of the multi-bar structure 310 and/or the guide plate, the weight of the electronic device 101 can be reduced. According to an embodiment, the rigidity of the multi-bar structure 310 and/or the guide plate 320 may be greater than the rigidity of the first housing 201. According to an embodiment, the first material may include stainless steel.

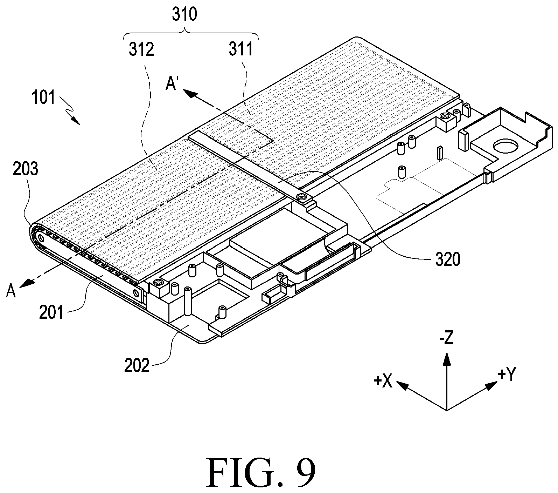

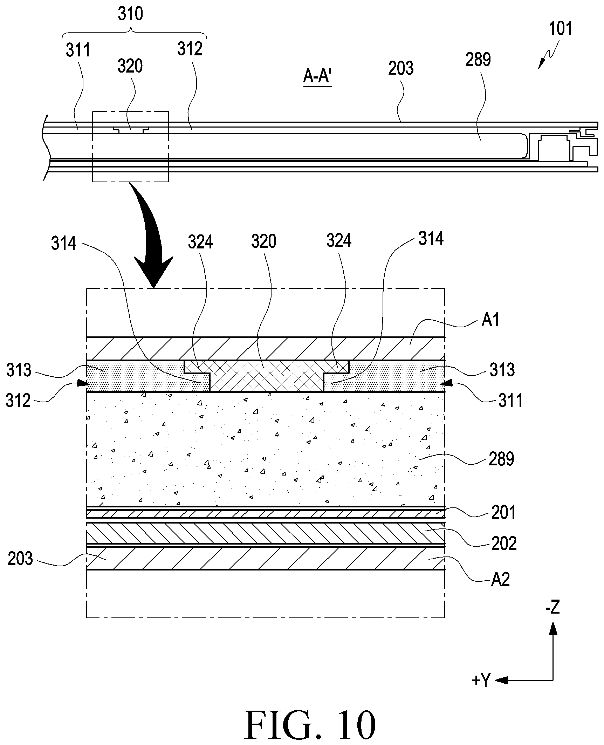

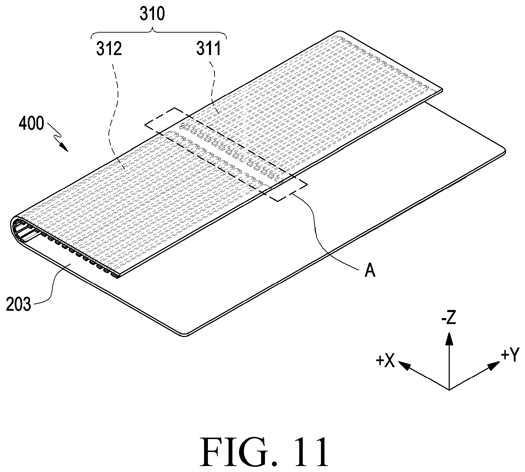

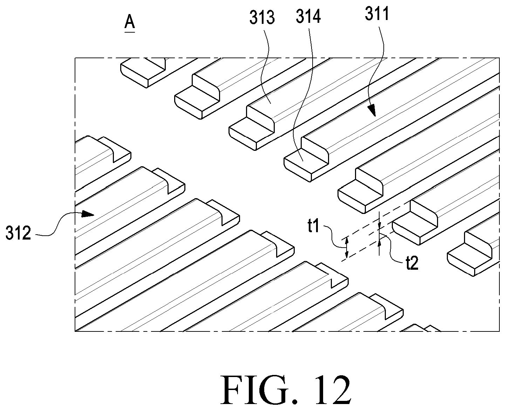

FIG. 9 is a perspective view of an electronic device including a guide plate and a multi-bar structure according to an embodiment of the present disclosure. FIG. 10 is a cross-sectional view of an embodiment of the disclosure, taken along line A-A' in FIG. 9. FIG. 11 is a perspective view of a multi-bar structure according to an embodiment of the disclosure. FIG. 12 is an enlarged view of area A of FIG. 11 according to an embodiment of the present disclosure.

Referring to FIG. 9, FIG. 10, FIG. 11, and/or FIG. 12, the electronic device 101 may include a first housing 201, a second housing 202, a display 203, a multi-bar structure 310, and a guide plate 320. The configurations of the first housing 201, the second housing 202, the display 203, the multi-bar structure 310, and the guide plate 320 in FIG. 9, FIG. 10, FIG. 11, and/or FIG. 12 may be wholly or partially the same as those of the first housing 201, the second housing 202, the display 203, the multi-bar structure 310, and the guide plate 320 in FIG. 7A.

According to an embodiment, the guide plate 320 may guide the movement of the multi-bar structure 310. For example, at least a portion of the multi-bar structure 310 may be in contact with at least a portion of the guide plate 320, and the multi-bar structure 310 may slide along the guide plate 320.

According to an embodiment, at least a portion of the guide plate 320 may be engaged with at least a portion of the multi-bar structure 310. For example, the multi-bar structure 310 may include at least one bar 313 attached to the display 203 and a first protrusion 314 extending from the bar 313. According to an embodiment, at least one bar 313 may be plurality of bars arranged in parallel to each other. According to an embodiment, the guide plate 320 may include a second protrusion 324 extending toward the bar 313. According to an embodiment, the first protrusion 314 of the multi-bar structure 310 may face the second protrusion 324 of the guide plate 320. The multi-bar structure 310 may move relative to the guide plate 320 in the state in which the first protrusion 314 faces the second protrusion 324. According to an embodiment, the second protrusion 324 may be located between the first protrusion 314 of the multi-bar structure 310 and the display 203.

According to an embodiment, the first protrusion 314 of the multi-bar structure 310 may be referred to as a portion of the second end portion of the multi-bar structure 310 (e.g., the second end portions 311b and 312b in FIG. 7A). For example, the first protrusion 314 of the first multi-bar portion 311 may be interpreted as a portion of the (2-1)^{th} end portion 311b, and the first protrusion 314 of the second multi-bar portion 312 may be interpreted as a portion of the (2-2)^{th} end portion 312b.

According to another embodiment (not illustrated), the guide plate 320 may include a groove configured to accommodate the first protrusion 314 of the multi-bar structure 310, and the multi-bar structure 310 may move relative to the guide plate 320 along the groove.

According to an embodiment, the guide plate 320 may be disposed between the display 203 and the battery 289. For example, when the electronic device 101 is in the closed state (e.g., FIG. 9 ), the guide plate 320 may be located above the battery 289 (e.g., in the -Z direction) together with a portion of the multi-bar structure 310.

According to an embodiment, the first protrusion 314 of the multi-bar structure 310 may support the display 203. According to an embodiment, the first protrusion 314 of the multi-bar structure 310 may be disposed between the second protrusion 324 of the guide plate 320 and the battery 289.

According to an embodiment, the multi-bar structure 310 may slide with respect to the guide plate 320 together with the display 203. The guide plate 320 may move with respect to the second housing 202 together with the first housing 201 and/or the battery 289.

Referring to FIG. 11, the display assembly 400 may include a display 203 and a multi-bar structure 310. For example, the display assembly 400 may be referred to as an assembly of the display 203 and the multi-bar structure 310 attached to at least a portion of the display 203 (e.g., the second display area A2 in FIG. 4A). The configurations of the display 203 and the multi-bar structure 310 in FIG. 11 may be the same as those of the display 203 and the multi-bar structure 310 in FIG. 9.

According to an embodiment, the thickness of the first protrusion 314 may be different from the thickness of the bar 313. For example, the bar 313 of the multi-bar structure 310 may have a first thickness t1, and the first protrusion 314 may have a second thickness t2 that is different from the first thickness t1. According to an embodiment, the second thickness t2 of the first protrusion 314 may be smaller than the first thickness t1 of the bar 313. According to an embodiment, the thickness of the guide plate (e.g., the guide plate 320 in FIG. 8A) may be substantially equal to the thickness of the bar 313. For example, the guide plate 320 may have the first thickness t1. According to an embodiment, the sum of the second thickness t2 of the first protrusion 314 and the thickness of the second protrusion (e.g., the second protrusion 324 in FIG. 10) of the guide plate 320 may be substantially equal to the first thickness t1. According to an embodiment, the first thickness t1 may be about 0.6 to 0.8 mm. The second thickness t2 may be about 0.3 to 0.4 mm.

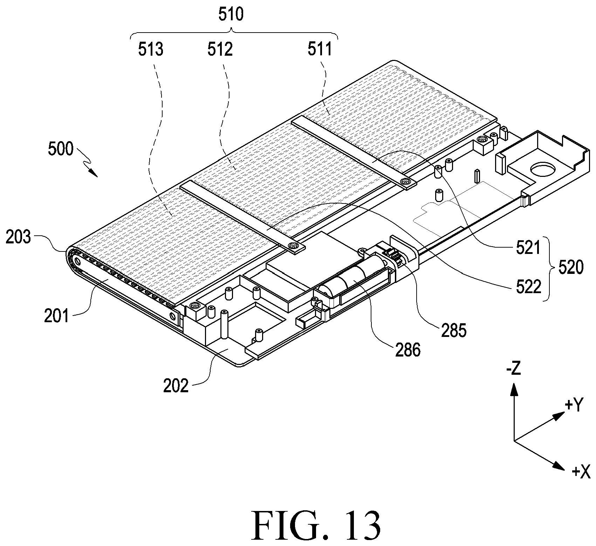

FIG. 13 is a perspective view of an electronic device including a first guide plate and a second guide plate according to an embodiment of the present disclosure.

Referring to FIG. 13, an electronic device 500 may include a first housing 201, a second housing 202, a display 203, a gear 285, a motor structure 286, a multi-bar structure 510, and a guide plate 520. The configurations of the first housing 201, the second housing 202, the display 203, the gear 285, the motor structure 286, the multi-bar structure 510, and the guide plate 520 in FIG. 13 may be wholly or partially the same as those of the first housing 201, the second housing 202, the display 203, the gear 285, the motor structure 286, the multi-bar structure 310, and the guide plate 320 in FIG. 7A.

According to an embodiment, the multi-bar structure 510 may include a plurality of multi-bar portions 511, 512, and 513. For example, the multi-bar structure 510 may include a first multi-bar portion 511, a second multi-bar portion 512 spaced apart from the first multi-bar portion 511, and a third multi-bar portion 513 spaced apart from the first multi-bar portion 511 and/or the second multi-bar portion 512. According to an embodiment, the first multi-bar portion 511 may be located between the first guide plate 521 and the guide rail (e.g., the guide rail 215 in FIG. 4A). The second multi-bar portion 512 may be located between the first guide plate 521 and the second guide plate 522. The third multi-bar portion 513 may be located between the second guide plate 522 and the guide rail 215. FIG. 13 illustrates that the multi-bar structure 510 includes three multi-bar portions (e.g., the first multi-bar portion 511, the second multi-bar portion 512, and the third multi-bar portion 513) spaced apart from each other, but the shape of the multi-bar structure 510 is not limited thereto. For example, multi-bar structure 510 may include four or more multi-bar portions spaced apart from each other.

According to an embodiment, the first multi-bar portion 511, the second multi-bar portion 512, and/or the third multi-bar portion 513 may be arranged substantially in parallel to each other. For example, the first multi-bar portion 511, the second multi-bar portion 512, and/or the third multi-bar portion 513 may be arranged along the width direction of the electronic device 101 (e.g., the X-axis direction).

According to an embodiment, the guide plate 520 may include a plurality of guide plates 521 and 522. For example, the guide plate 520 may include a first guide plate 521 and a second guide plate 522 spaced apart from the first guide plate 521. According to an embodiment, the first guide plate 521 may be located between the first multi-bar portion 511 and the second multi-bar portion 512. The second guide plate 522 may be located between the second multi-bar portion 512 and the third multi-bar portion 513. FIG. 13 illustrates that the guide plate 520 includes two guide plates (e.g., the first guide plate 521 and the second guide plate 522) spaced apart from each other, but the shape of the guide plate 520 is not limited thereto. For example, the guide plate 520 may include three or more guide plates.

According to an embodiment, the first guide plate 521 may be arranged substantially in parallel to the second guide plate 522. For example, the first guide plate 521 and the second guide plate 522 may be arranged along the width direction of the electronic device 101 (e.g., the X-axis direction).

According to various embodiments of the present disclosure, an electronic device (e.g., the electronic device 101 in FIG. 3) may include a housing (e.g., the first housing 201 and/or the second housing 202 in FIG. 3) including a first housing (e.g., the first housing 201 in FIG. 3) and a second housing (e.g., the second housing 202 in FIG. 3) configured to accommodate at least a portion of the first housing and to move relative to the first housing, a display (e.g., the display 203 in FIG. 3) configured to be slidable based on slide movement of the first housing, a battery (e.g., the battery 289 in FIG. 4A) disposed within the first housing, a multi-bar structure (e.g., the multi-bar structure 310 in FIG. 7A) configured to support the display and including a first multi-bar portion (e.g., the multi-bar portion 311 in FIG. 7A) and a second multi-bar portion (e.g., the multi-bar portion 312 in FIG. 7A) spaced apart from the first multi-bar portion, and a guide plate (e.g., the guide plate 320 in FIG. 7A) connected to the first housing and configured to be at least partially located between the first multi-bar portion and the second multi-bar portion. At least a portion of the multi-bar structure may be configured to move relative to the guide plate along the space between the guide plate and the battery.

According to an embodiment, the electronic device may further include a guide rail (e.g., the guide rail 215 in FIG. 4A) connected to the first housing and configured to guide the movement of the multi-bar structure.

According to an embodiment, the multi-bar structure may include a first end facing the guide rail (e.g., the first end 311a or 312a in FIG. 7A) and a second end (e.g., the second end 311b or 312b in FIG. 7A) opposite to the first end and facing the guide plate.

According to an embodiment, the multi-bar structure may include plurality of bars (e.g., the bars 313 in FIG. 9) connected to the display and a protrusion (e.g., the protrusions 314 in FIG. 10) extending from each of the plurality of bars and configured to be accommodated between the guide plate and the battery.

According to an embodiment, the guide plate may include a second protrusion (e.g., the second protrusion 324 in FIG. 10) facing the first protrusion and at least partially located between the first protrusion and the display.

According to an embodiment, a first thickness (e.g., the first thickness t1 in FIG. 12) of the bar may be greater than a second thickness (e.g., the second thickness t2 in FIG. 12) of the first protrusion.

According to an embodiment, the guide plate may include a first end area (e.g., the first end area 321 in FIG. 8A) connected to the first housing, a second end area (e.g., the second end area 322 in FIG. 8A) opposite to the first end area and connected to the first housing, and a central area (e.g., the central area 323 in FIG. 8A) extending from the first end area to the second area across the battery.

According to an embodiment, the multi-bar structure and the guide plate may be made of a first material having a first density, and the first housing may be made of a second material having a second density lower than the first density of the first material.

According to an embodiment, the multi-bar structure may include a third multi-bar portion (e.g., the third multi-bar portion 513 in FIG. 13) spaced apart from the first multi-bar portion and the second multi-bar portion, and the guide plate may include a first guide plate (e.g., the first guide plate 521 in FIG. 13) at least partially located between the first multi-bar portion and the second multi-bar portion, and a second guide plate (e.g., the second guide plate 522 in FIG. 13) at least partially located between the second multi-bar portion and the third multi-bar portion.

According to an embodiment, the electronic device may further include a motor structure (e.g., the motor structure 286 in FIG. 8A) disposed on the first housing and configured to generate a driving force for sliding movement of the housing.

According to an embodiment, the electronic device may further include a gear (e.g., the gear 285 in FIG. 8A) connected to the motor structure and configured to rotate based on the driving force and a rack (e.g., the rack 287 in FIG. 8A) connected to the second housing.

According to an embodiment, at least a portion of the guide plate may be configured to face the rack.

According to an embodiment, the display may include a first display area connected to the second housing, and a second display area extending from the first display area and at least partially connected to the multi-bar structure.

According to an embodiment, the multi-bar structure and the guide plate may be configured to be disposed between the first display area and the battery.

According to an embodiment, the first housing may include a first plate configured to support the second display area, and a second housing may include a second plate configured to support the first display area and to accommodate a printed circuit board.

According to various embodiments of the present disclosure, an electronic device (e.g., the electronic device 101 in FIG. 3) may include a first housing (e.g., the first housing 201 in FIG. 3), a second housing (e.g., the second housing 202 in FIG. 3) configured to accommodate at least a portion of the first housing and to move relative to the first housing, a display (e.g., the display 203 in FIG. 3) configured to be slidable based on slide movement of the first housing, a multi-bar structure (e.g., the multi-bar structure 310 in FIG. 7A) configured to support the display and including a first multi-bar portion (e.g., the first multi-bar portion 311 in FIG. 7A) and a second multi-bar portion (e.g., the multi-bar portion 312 in FIG. 7A) spaced apart from the first multi-bar portion, a guide plate (e.g., the guide plate 320 in FIG. 8A) disposed between the first multi-bar portion and the second multi-bar portion and configured to move relative to the second housing together with the first housing, and a guide rail (e.g., guide rail 215 in FIG. 4A) connected to the first housing and configured to guide the movement of the multi-bar structure. The multi-bar structure may be located between the guide rail and the guide plate, and the multi-bar structure may be configured to move relative to the guide plate and the guide rail.

According to an embodiment, the multi-bar structure may include a first end facing the guide rail (e.g., the first end 311a or 312a in FIG. 7A) and a second end (e.g., the second end 311b or 312b in FIG. 7A) opposite to the first end and facing the guide plate.

According to an embodiment, the electronic device may further include a battery (e.g., the battery 289 in FIG. 4) disposed within the first housing, and the multi-bar structure may include plurality of bars (e.g., the bars 313 in FIG. 12) connected to the display and a first protrusion (e.g., the first protrusions 314 in FIG. 12) extending from each of the plurality of bars and configured to be accommodated between the guide plate and the battery.

According to an embodiment, the guide plate may include a second protrusion (e.g., the second protrusion 314 in FIG. 10) facing the first protrusion and at least partially located between the first protrusions and the display.

According to an embodiment, the multi-bar structure and the guide plate may be made of a first material having a first density, and the first housing may be made of a second material having a second density lower than the first density of the first material.

It may be apparent to a person ordinarily skilled in the technical field to which the disclosure belongs that the above-described electronic device including a multi-bar structure according to the disclosure is not limited by the above-described embodiments and drawings, and can be variously substituted, modified, and changed within the technical scope of the disclosure.

## Claims

1. An electronic device comprising:
a housing (210) comprising a first housing (201) and a second housing (202) configured to accommodate at least a portion of the first housing (201), wherein the first housing (201) is configured to move relative to the second housing (202);
a display (203) configured to be slidable based on slide movement of the first housing (201);
a battery (289) disposed within the housing (210);
a multi-bar structure (310) attached to the display (203) to support the display (203) and including a first set of bars (313a) and a second set of bars (313b) spaced apart from the first set of bars (313a); and
a guide plate (320) connected to the first housing (201) and located between the first set of bars (313a) and the second set of bars (313b), wherein the guide plate (320) is configured to support the display (203),
wherein a second end portion (311b) of the first set of bars (313a) is engaged with a first side of the guide plate (320) and a second end portion (312b) of the second set of bars is engaged with a second side of the guide plate,
wherein the multi-bar structure (310) is configured to move along the first side of the guide plate and the second side of the guide plate (320).

2. The electronic device of claim 1, further comprising a guide rail (215) connected to the first housing (210) and configured to guide movement of the multi-bar structure (310).

3. The electronic device of claim 2, wherein the multi-bar structure (310) includes a first end (311a, 312a) facing the guide rail (215).

4. The electronic device of any of claims 1 to 3, wherein the first set of bars (313a) comprises a first protrusion (314) engaged with the first side of the guide plate (320), and
wherein the second set of bars (313b) comprises a second protrusion (314) engaged with the second side of the guide plate (320).

5. The electronic device of claim 4, wherein the first side of the guide plate (320) faces the first protrusion (314) and is at least partially located between the first protrusion (314) and the display (203).

6. The electronic device of claim 4, wherein a first thickness (t1) of the first set of bars (313a) is greater than a second thickness (t2) of the first protrusion (314).

7. The electronic device of any of claims 1 to 6,
wherein the battery (289) is disposed within the first housing (201), and
wherein the guide plate (320) comprises a first end area (321) connected to the first housing (201), a second end area (322) opposite to the first end area (321) and connected to the first housing (201), and a central area (323) extending from the first end area (321) to the second end area (322) across of the battery (289).

8. The electronic device of any of claims 1 to 7, wherein the multi-bar structure (310) and the guide plate (320) include a first material having a first density, and
wherein the first housing (201) includes a second material having a second density lower than the first density of the first material.

9. The electronic device of claim 1, wherein the multi-bar structure (510) includes a third set of bars (513) spaced apart from the first set of bars (511) and the second set of bars (512), and
wherein the guide plate (520) includes a first guide plate (521) at least partially located between the first set of bars (511) and the second set of bars (512), and a second guide plate (522) at least partially located between the second set of bars (512) and the third set of bars (513).

10. The electronic device of any of claims 1 to 9, further comprising a motor structure (286) disposed on the first housing (201) and configured to generate a driving force for sliding movement of the first housing (201).

11. The electronic device of claim 10, further comprising a gear (285) connected to the motor structure (286) and configured to rotate based on the driving force, and a rack (287) connected to the second housing (202).

12. The electronic device of claim 11, wherein at least a portion of the guide plate (320, 520) is configured to face the rack (287).

13. The electronic device of any of claims 1 to 12, wherein the display (203) includes a first display area (A1) connected to the second housing (202), and a second display area (A2) extending from the first display area (A1) and at least partially connected to the multi-bar structure (310, 510).

14. The electronic device of claim 13, wherein the multi-bar structure (310, 510) and the guide plate (320, 520) are configured to be disposed between the first display area (A1) and the battery (289).

15. The electronic device of claim 13, wherein the first housing (201) includes a first plate (211) configured to support the second display area (A2), and
wherein the second housing (202) includes a second plate (221) configured to support the first display area (A1) and to accommodate a printed circuit board (204).

## Patentansprüche

1. Elektronische Vorrichtung, umfassend:
ein Gehäuse (210), das ein erstes Gehäuse (201) und ein zweites Gehäuse (202) umfasst, das zur Aufnahme mindestens eines Abschnitts des ersten Gehäuses (201) konfiguriert ist, wobei das erste Gehäuse (201) dazu konfiguriert ist, sich relativ zum zweiten Gehäuse (202) zu bewegen;
eine Anzeige (203), die so konfiguriert ist, dass sie auf der Grundlage einer Gleitbewegung des ersten Gehäuses (201) verschiebbar ist;
eine Batterie (289), die innerhalb des Gehäuses (210) angeordnet ist;
eine Mehrstangenstruktur (310), die an der Anzeige (203) angebracht ist, um die Anzeige (203) zu stützen, und einen ersten Satz von Stangen (313a) und einen zweiten Satz von Stangen (313b) umfasst, der von dem ersten Satz von Stangen (313a) beabstandet ist; und
eine Führungsplatte (320), die mit dem ersten Gehäuse (201) verbunden ist und sich zwischen dem ersten Satz von Stangen (313a) und dem zweiten Satz von Stangen (313b) befindet, wobei die Führungsplatte (320) dazu konfiguriert ist, die Anzeige (203) zu stützen,
wobei ein zweiter Endabschnitt (311b) des ersten Satzes von Stangen (313a) mit einer ersten Seite der Führungsplatte (320) und ein zweiter Endabschnitt (312b) des zweiten Satzes von Stangen mit einer zweiten Seite der Führungsplatte in Eingriff steht,
wobei die Mehrstangenstruktur (310) dazu konfiguriert ist, sich entlang der ersten Seite der Führungsplatte und der zweiten Seite der Führungsplatte (320) zu bewegen.

2. Elektronische Vorrichtung nach Anspruch 1, umfassend ferner eine Führungsschiene (215), die mit dem ersten Gehäuse (210) verbunden und dazu konfiguriert ist, die Bewegung der Mehrstangenstruktur (310) zu führen.

3. Elektronische Vorrichtung nach Anspruch 2, wobei die Mehrstangenstruktur (310) ein erstes Ende (311a, 312a) umfasst, das der Führungsschiene (215) zugewandt ist.

4. Elektronische Vorrichtung nach einem der Ansprüche 1 bis 3, wobei der erste Satz von Stangen (313a) einen ersten Vorsprung (314) umfasst, der mit der ersten Seite der Führungsplatte (320) in Eingriff steht, und
wobei der zweite Satz von Stangen (313b) einen zweiten Vorsprung (314) umfasst, der mit der zweiten Seite der Führungsplatte (320) in Eingriff steht.

5. Elektronische Vorrichtung nach Anspruch 4, wobei die erste Seite der Führungsplatte (320) dem ersten Vorsprung (314) zugewandt ist und sich zumindest teilweise zwischen dem ersten Vorsprung (314) und der Anzeige (203) befindet.

6. Elektronische Vorrichtung nach Anspruch 4, wobei eine erste Dicke (t1) des ersten Satzes von Stangen (313a) größer ist als eine zweite Dicke (t2) des ersten Vorsprungs (314).

7. Elektronische Vorrichtung nach einem der Ansprüche 1 bis 6,
wobei die Batterie (289) innerhalb des ersten Gehäuses (201) angeordnet ist, und
wobei die Führungsplatte (320) einen ersten Endbereich (321), der mit dem ersten Gehäuse (201) verbunden ist, einen zweiten Endbereich (322), der dem ersten Endbereich (321) gegenüberliegt und mit dem ersten Gehäuse (201) verbunden ist, und einen mittleren Bereich (323) umfasst, der sich vom ersten Endbereich (321) zum zweiten Endbereich (322) über die Batterie (289) erstreckt.

8. Elektronische Vorrichtung nach einem der Ansprüche 1 bis 7, wobei die Mehrstangenstruktur (310) und die Führungsplatte (320) ein erstes Material mit einer ersten Dichte umfassen, und
wobei das erste Gehäuse (201) ein zweites Material mit einer zweiten Dichte umfasst, die geringer ist als die erste Dichte des ersten Materials.

9. Elektronische Vorrichtung nach Anspruch 1, wobei die Mehrstangenstruktur (510) einen dritten Satz von Stangen (513) umfasst, der von dem ersten Satz von Stangen (511) und dem zweiten Satz von Stangen (512) beabstandet ist, und
wobei die Führungsplatte (520) eine erste Führungsplatte (521), die sich zumindest teilweise zwischen dem ersten Satz von Stangen (511) und dem zweiten Satz von Stangen (512) befindet, und eine zweite Führungsplatte (522) umfasst, die sich zumindest teilweise zwischen dem zweiten Satz von Stangen (512) und dem dritten Satz von Stangen (513) befindet.

10. Elektronische Vorrichtung nach einem der Ansprüche 1 bis 9, umfassend ferner eine Motorstruktur (286), die an dem ersten Gehäuse (201) angeordnet und dazu konfiguriert ist, eine Antriebskraft für die Gleitbewegung des ersten Gehäuses (201) zu erzeugen.

11. Elektronische Vorrichtung nach Anspruch 10, umfassend ferner ein Zahnrad (285), das mit der Motorstruktur (286) verbunden und dazu konfiguriert ist, sich auf der Grundlage der Antriebskraft zu drehen, und eine mit dem zweiten Gehäuse (202) verbundene Zahnstange (287).

12. Elektronische Vorrichtung nach Anspruch 11, wobei mindestens ein Abschnitt der Führungsplatte (320, 520) so konfiguriert ist, dass er der Zahnstange (287) zugewandt ist.

13. Elektronische Vorrichtung nach einem der Ansprüche 1 bis 12, wobei die Anzeige (203) einen ersten Anzeigebereich (A1), der mit dem zweiten Gehäuse (202) verbunden ist, und einen zweiten Anzeigebereich (A2) umfasst, der sich vom ersten Anzeigebereich (A1) erstreckt und zumindest teilweise mit der Mehrstangenstruktur (310, 510) verbunden ist.

14. Elektronische Vorrichtung nach Anspruch 13, wobei die Mehrstangenstruktur (310, 510) und die Führungsplatte (320, 520) so konfiguriert sind, dass sie zwischen dem ersten Anzeigebereich (A1) und der Batterie (289) angeordnet sind.

15. Elektronische Vorrichtung nach Anspruch 13, wobei das erste Gehäuse (201) eine erste Platte (211) umfasst, die dazu konfiguriert ist, den zweiten Anzeigebereich (A2) zu stützen, und
wobei das zweite Gehäuse (202) eine zweite Platte (221) umfasst, die dazu konfiguriert ist, den ersten Anzeigebereich (A1) zu stützen und eine Leiterplatte (204) aufzunehmen.

## Revendications

1. Dispositif électronique comprenant :
un boîtier (210) comportant un premier boîtier (201) et un second boîtier (202) configuré pour loger au moins une partie du premier boîtier (201), dans lequel le premier boîtier (201) est configuré pour se déplacer par rapport au second boîtier (202) ;
un afficheur (203) configuré pour glisser en fonction d'un mouvement de glissement du premier boîtier (201) ;
une batterie (289) disposée à l'intérieur du boîtier (210) ;
une structure à barres multiples (310) attachée à l'afficheur (203) pour soutenir l'afficheur (203) et comportant un premier ensemble de barres (313a) et un deuxième ensemble de barres (313b) espacé du premier ensemble de barres (313a) ; et
une plaque de guidage (320) reliée au premier boîtier (201) et située entre le premier ensemble de barres (313a) et le deuxième ensemble de barres (313b), dans lequel la plaque de guidage (320) est configurée pour soutenir l'afficheur (203),
dans lequel une seconde partie d'extrémité (311b) du premier ensemble de barres (313a) est engagée avec un premier côté de la plaque de guidage (320) et une seconde partie d'extrémité (312b) du deuxième ensemble de barres est engagée avec un second côté de la plaque de guidage,
dans lequel la structure à barres multiples (310) est configurée pour se déplacer le long du premier côté de la plaque de guidage et du second côté de la plaque de guidage (320).

2. Dispositif électronique selon la revendication 1, comprenant en outre un rail de guidage (215) relié au premier boîtier (210) et configuré pour guider un mouvement de la structure à barres multiples (310).

3. Dispositif électronique selon la revendication 2, dans lequel la structure à barres multiples (310) comporte une première extrémité (311a, 312a) faisant face au rail de guidage (215).

4. Dispositif électronique selon l'une quelconque des revendications 1 à 3, dans lequel le premier ensemble de barres (313a) comprend une première saillie (314) engagée avec le premier côté de la plaque de guidage (320), et
dans lequel le deuxième ensemble de barres (313b) comprend une seconde saillie (314) engagée avec le second côté de la plaque de guidage (320).

5. Dispositif électronique selon la revendication 4, dans lequel le premier côté de la plaque de guidage (320) fait face à la première saillie (314) et est au moins partiellement situé entre la première saillie (314) et l'afficheur (203).

6. Dispositif électronique selon la revendication 4, dans lequel une première épaisseur (t1) du premier ensemble de barres (313a) est supérieure à une seconde épaisseur (t2) de la première saillie (314).

7. Dispositif électronique selon l'une quelconque des revendications 1 à 6,
dans lequel la batterie (289) est disposée à l'intérieur du premier boîtier (201), et
dans lequel la plaque de guidage (320) comprend une première zone d'extrémité (321) reliée au premier boîtier (201), une seconde zone d'extrémité (322) opposée à la première zone d'extrémité (321) et reliée au premier boîtier (201), et une zone centrale (323) s'étendant de la première zone d'extrémité (321) à la seconde zone d'extrémité (322) à travers la batterie (289).

8. Dispositif électronique selon l'une quelconque des revendications 1 à 7, dans lequel la structure à barres multiples (310) et la plaque de guidage (320) comportent un premier matériau ayant une première densité, et
dans lequel le premier boîtier (201) comporte un second matériau ayant une seconde densité inférieure à la première densité du premier matériau.

9. Dispositif électronique selon la revendication 1, dans lequel la structure à barres multiples (510) comporte un troisième ensemble de barres (513) espacé du premier ensemble de barres (511) et du deuxième ensemble de barres (512), et
dans lequel la plaque de guidage (520) comporte une première plaque de guidage (521) au moins partiellement située entre le premier ensemble de barres (511) et le deuxième ensemble de barres (512), et une seconde plaque de guidage (522) au moins partiellement située entre le deuxième ensemble de barres (512) et le troisième ensemble de barres (513).

10. Dispositif électronique selon l'une quelconque des revendications 1 à 9, comprenant en outre une structure de moteur (286) disposée sur le premier boîtier (201) et configurée pour générer une force d'entraînement pour un mouvement de glissement du premier boîtier (201).

11. Dispositif électronique selon la revendication 10, comprenant en outre un engrenage (285) relié à la structure de moteur (286) et configuré pour tourner en fonction de la force d'entraînement, et une crémaillère (287) reliée au second boîtier (202).

12. Dispositif électronique selon la revendication 11, dans lequel au moins une partie de la plaque de guidage (320, 520) est configurée pour faire face à la crémaillère (287).

13. Dispositif électronique selon l'une quelconque des revendications 1 à 12, dans lequel l'afficheur (203) comporte une première zone d'affichage (A1) reliée au second boîtier (202), et une seconde zone d'affichage (A2) s'étendant à partir de la première zone d'affichage (A1) et au moins partiellement reliée à la structure à barres multiples (310, 510).

14. Dispositif électronique selon la revendication 13, dans lequel la structure à barres multiples (310, 510) et la plaque de guidage (320, 520) sont configurées pour être disposées entre la première zone d'affichage (A1) et la batterie (289).

15. Dispositif électronique selon la revendication 13, dans lequel le premier boîtier (201) comporte une première plaque (211) configurée pour soutenir la seconde zone d'affichage (A2), et
dans lequel le second boîtier (202) comporte une seconde plaque (221) configurée pour soutenir la première zone d'affichage (A1) et pour loger une carte de circuit imprimé (204).
